# DEMANDE DE BREVET EUROPEEN

(11) **EP 4 621 276 A1**
(43) Date de publication de la demande: **24.09.2025**
(21) Numéro de dépôt: 25165466.1
(22) Date de dépôt: 21.03.2025
(51) Int. Cl.: F16L 55/124, F16L 55/105

(54) **PROCÉDÉ D'OBTURATION D'UNE CONDUITE ET KIT D'OBTURATION ASSOCIÉ**

(30) Priorité: 22.03.2024 FR 2402907
(71) Demandeur: GRDF, 75009 Paris (FR)
(72) Inventeur: GULLI, Guillaume, 75009 Paris (FR); GUIGONIS, Philippe, 75009 Paris (FR); COFFINET, Philippe, 75009 Paris (FR); SANDRA, Guillaume, 75009 Paris (FR); FRONTERO, Philippe, 75009 Paris (FR)
(74) Mandataire: IP Trust

(57) **Abrégé**

L'invention concerne un procédé d'obturation d'une conduite (10), et d'un kit d'obturation de cette conduite, le Kit d'obturation de conduites (10), comprenant :

- un outil d'obturation qui comprend une section principale à l'intérieur de laquelle est formé un alésage qui s'étend, selon un sens principal, d'une extrémité de butée (111) vers une extrémité de couplage (112), une perche d'insertion (120) pourvue d'un arbre (121) en liaison pivot glissant avec l'alésage, et qui s'étend selon le sens principal d'une extrémité de manipulation (122) vers une extrémité d'insertion (123), l'arbre (121) comprenant une butée d'arbre (124) disposée entre l'extrémité de manipulation (122) disposée et l'extrémité de buté, un obturateur (91. 92, 93) étant disposé dans le prolongement de l'extrémité d'insertion (123) en aval de l'extrémité de couplage (112) selon le sens principal ;
- un jeu d'au moins deux cales présentant, pour chaque cale, une hauteur H qui lui est spécifique, chaque cale étant configurée pour être intercalée entre la butée d'arbre (124) et l'extrémité de butée (111) de manière à définir un profondeur d'insertion de l'obturateur.

## Description

### DOMAINE DE L'INVENTION

L'invention se rapporte au domaine des conduites fluidiques, et notamment des conduites fluidiques sous pression.

La présente invention se rapporte au domaine des réseaux de distribution de fluides, et plus particulièrement de gaz domestique.

La présente invention concerne plus particulièrement le domaine de la maintenance de ces réseaux de distribution de fluide.

A cet égard, la présente invention concerne un procédé d'obturation d'une conduite en charge, notamment à des fins de maintenance.

### ARRIERE PLAN TECHNOLOGIQUE DE L'INVENTION

Les réseaux de distribution de fluide, et notamment de distribution de fluide sous pression, font régulièrement l'objet de opération de contrôle et/ou de maintenance.

Parmi ces dernières, on peut notamment citer la pose d'un dérivation ou encore la pose d'un robinet.

Toutefois, afin de limiter l'indisponibilité d'un réseau de distribution, il est généralement considéré d'intervenir sur ce dernier sous charge notamment en obturant la ou les section nécessitant une intervention.

Ainsi, un procédé d'obturation d'une conduite connu de l'état de la technique comprend :
1) une étape de perçage, de deux zones de la conduite dites, respectivement, zone d'accès supérieure et zone d'accès inférieure, et diamétralement opposées l'une de l'autre ;
2) une étape d'insertion d'un obturateur gonflable dans la conduite par la zone d'accès supérieure, l'insertion de l'obturateur étant réalisée au moyen d'un outil d'insertion qui comprend une section principale à l'intérieur de laquelle est formé un alésage qui s'étend, selon un sens principal, d'une extrémité de butée vers une extrémité de couplage, une perche d'insertion pourvue d'un arbre en liaison glissière ou pivot glissant avec l'alésage, et qui s'étend selon le sens principal d'une extrémité de manipulation vers une extrémité d'insertion, l'arbre comprenant une butée d'arbre disposée entre l'extrémité de manipulation disposée et l'extrémité de buté, l'obturateur étant disposé dans le prolongement de l'extrémité d'insertion en aval de l'extrémité de couplage selon le sens principal ;
3) une étape de gonflage de l'obturateur gonflable permettant ainsi d'obturer la conduite.

Toutefois, la pose de l'obturateur gonflable dans la conduite requiert un degré de précision qui, s'il n'est pas respecté, peut conduire à une obturation non étanche.

Ainsi, il est généralement prévu de disposer de repères visuels sur l'arbre permettant de contrôler l'insertion de l'obturateur dans la conduite.

Cette solution présente néanmoins des inconvénients. Notamment, le repérage de la course de l'arbre peut être faussée par un effet de parallaxe de lecture, une erreur de lecture.

Par ailleurs, les conditions de luminosité et météorologiques, dès lors qu'elles sont défavorables, peuvent également être source d'erreur.

Ainsi, un objet de la présente invention est de proposer un procédé d'obturation d'une conduite qui permet de contrôler de manière précise l'insertion de l'obturateur.

### BREVE DESCRIPTION DE L'INVENTION

Le but de la présente invention est atteint par un procédé d'obturation d'une conduite, d'un diamètre externe prédéterminé, le procédé d'obturation comprenant l'exécution des étapes suivantes :
a) une étape de perçage, de deux zones de la conduite dites, respectivement, zone d'accès supérieure et zone d'accès inférieure, et diamétralement opposées l'une de l'autre ;
b) une étape d'insertion d'un obturateur gonflable dans la conduite par la zone d'accès supérieure, l'insertion de l'obturateur étant réalisée au moyen d'un outil d'insertion qui comprend une section principale à l'intérieur de laquelle est formé un alésage qui s'étend, selon un sens principal, d'une extrémité de butée vers une extrémité de couplage, une perche d'insertion pourvue d'un arbre en liaison glissière ou pivot glissant avec l'alésage, et qui s'étend selon le sens principal d'une extrémité de manipulation vers une extrémité d'insertion, l'arbre comprenant une butée d'arbre disposée entre l'extrémité de manipulation et l'extrémité de buté, l'obturateur étant disposé dans le prolongement de l'extrémité d'insertion en aval de l'extrémité de couplage selon le sens principal, l'outil d'insertion comprend également un jeu de cales, chaque cale, présentant une hauteur H qui lui est spécifique, est configurée pour être intercalée entre la butée d'arbre et l'extrémité de butée de manière à définir une profondeur d'insertion de l'obturateur, l'étape b) comprenant la détermination d'une profondeur d'insertion de l'obturateur et le choix d'une cale parmi le jeu de cales à disposer contre l'arbre entre la butée d'arbre et l'extrémité de butée.

Selon un mode de mise en œuvre, chaque cale parmi le jeu de cales comprend un profilé présentant une section en « U » ou en « C », et formant un logement, l'étape b) comprenant la disposition de l'arbre dans le logement, l'une des extrémités du profilé prenant appui contre l'extrémité de buté.

Selon un mode de mise en œuvre, l'étape c) comprend le coulissement de l'arbre dans l'alésage.

Selon un mode de mise en œuvre, ledit procédé comprend également une étape a0), exécutée avant l'étape a), de pose d'un adaptateur sur la conduite, l'adapteur comprenant deux sections dites respectivement, section supérieure et section inférieure, chaque section comprenant une base et une portion cylindrique surmontant ladite base, la base comprenant une plaque incurvée épousant de manière conforme la conduite, la portion cylindrique de la section inférieure étant bouchée hermétiquement par son extrémité libre, l'étape a0) comprenant la disposition de l'une et l'autre de la section supérieure et de la section inférieure sur la conduite dans des positions diamétralement opposées.

Selon un mode de mise en œuvre, ledit procédé comprend également une étape a1) de couplage d'un sas avec l'extrémité libre de la portion cylindrique de la section supérieure.

Selon un mode de mise en œuvre, l'exécution de l'étape b) comprend le couplage de l'extrémité de couplage avec le sas.

Selon un mode de mise en œuvre, l'étape b) est suivi d'une étape de gonflage de l'obturateur disposé dans la conduite.

Selon un mode de mise en œuvre, l'obturateur comprend une gaine gonflable de forme cylindrique et bouchée à chacune de ses extrémités par un capuchon droit.

L'invention concerne également un kit d'obturation de conduites, ledit kit comprenant :
- un outil d'obturation qui comprend une section principale à l'intérieur de laquelle est formé un alésage qui s'étend, selon un sens principal, d'une extrémité de butée vers une extrémité de couplage, une perche d'insertion pourvue d'un arbre en liaison pivot ou pivot glissant avec l'alésage, et qui s'étend selon le sens principal d'une extrémité de manipulation vers une extrémité d'insertion, l'arbre comprenant une butée d'arbre disposée entre l'extrémité de manipulation disposée et l'extrémité de buté, un obturateur étant disposé dans le prolongement de l'extrémité d'insertion en aval de l'extrémité de couplage selon le sens principal ;
- un jeu de cales présentant, chaque cale, présentant une hauteur H qui lui est spécifique, est configurée pour être intercalée entre la butée d'arbre et l'extrémité de butée de manière à définir un profondeur d'insertion de l'obturateur.

### BREVE DESCRIPTION DES DESSINS

D'autres caractéristiques et avantages de l'invention ressortiront de la description détaillée qui va suivre en référence aux figures annexées sur lesquelles :
[Fig.1] La figure 1 est une représentation schématique de la mise en place d'un adaptateur et d'un sas sur une conduite en vue du perçage puis de l'obturation de ladite conduite selon les principes exposés de la présente invention ;
[Fig.2] La figure 2 est une représentation schématique d'un moyen de perçage mis en œuvre pour l'exécution de l'étape a) de perçage de la conduite ;
[Fig.3] La figure 3 est une représentation schématique d'un obturateur susceptible d'être mis en œuvre dans le cadre de la présente invention ;
[Fig.4] La figure 4 est une représentation schématique d'un moyen d'insertion mis en œuvre dans le cadre de la présente invention ;

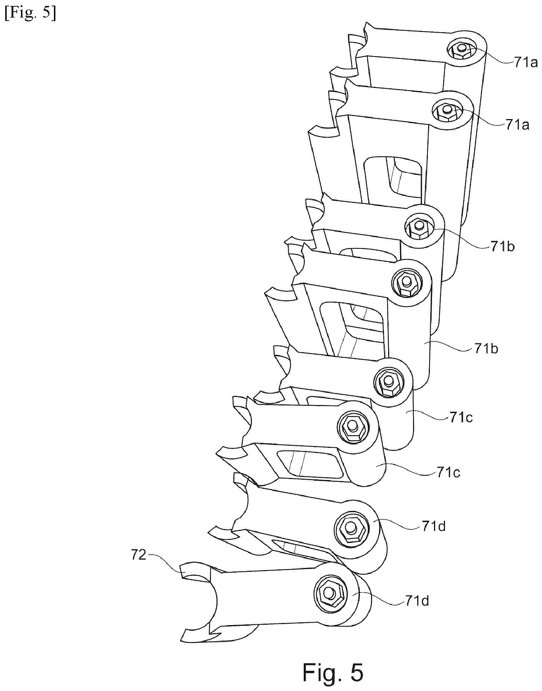

[Fig.5] La figure 5 est une photographie d'un jeu de cales susceptible d'être considéré dans la cadre de la présente invention ;
[Fig.6] La figure 6 est une représentation partielle d'une conduite selon un plan de coupe longitudinal et dans laquelle est inséré un obturateur, ledit obturateur ayant sa gaine gonflable gonflée.

### DESCRIPTION DETAILLEE DE L'INVENTION

L'invention concerne un procédé d'obturation d'une conduite, et notamment d'une conduite dans laquelle un fluide est susceptible de circuler.

Plus particulièrement, la présente invention concerne un procédé d'obturation pour lequel l'insertion d'un obturateur est maîtrisée par la mise en œuvre d'une cale d'ajustement.

Notamment, la présente invention concerne un procédé d'obturation d'une conduite, d'un diamètre externe prédéterminé, le procédé d'obturation comprenant l'exécution des étapes suivantes :
a) une étape de perçage, de deux zones de la conduite dites, respectivement, zone d'accès supérieure et zone d'accès inférieure, et diamétralement opposées l'une de l'autre ;
b) une étape d'insertion d'un obturateur gonflable dans la conduite par la zone d'accès supérieure, l'insertion de l'obturateur étant réalisée au moyen d'un outil d'insertion qui comprend une section principale à l'intérieur de laquelle est formé un alésage qui s'étend, selon un sens principal, d'une extrémité de butée vers une extrémité de couplage, une perche d'insertion pourvue d'un arbre en liaison glissière ou pivot glissant avec l'alésage, et qui s'étend selon le sens principal d'une extrémité de manipulation vers une extrémité d'insertion, l'arbre comprenant une butée d'arbre disposée entre l'extrémité de manipulation et l'extrémité de buté, l'obturateur étant disposé dans le prolongement de l'extrémité d'insertion en aval de l'extrémité de couplage selon le sens principal, l'outil d'insertion comprend également un jeu de cales, chaque cale, présentant une hauteur H qui lui est spécifique, est configurée pour être intercalée entre la butée d'arbre et l'extrémité de butée de manière à définir une profondeur d'insertion de l'obturateur, l'étape b) comprenant la détermination d'une profondeur d'insertion de l'obturateur et le choix d'une cale parmi le jeu de cales à disposer contre l'arbre entre la butée d'arbre et l'extrémité de butée.

Il est entendu que la conduite présente une forme cylindrique.

Il est également entendu que la zone d'accès supérieure et la zone d'accès inférieure, dans la mesure où elles sont le résultat d'un perçage au moyen d'un foret et/ou d'un trépan (ou scie cloche), sont chacune circulaires.

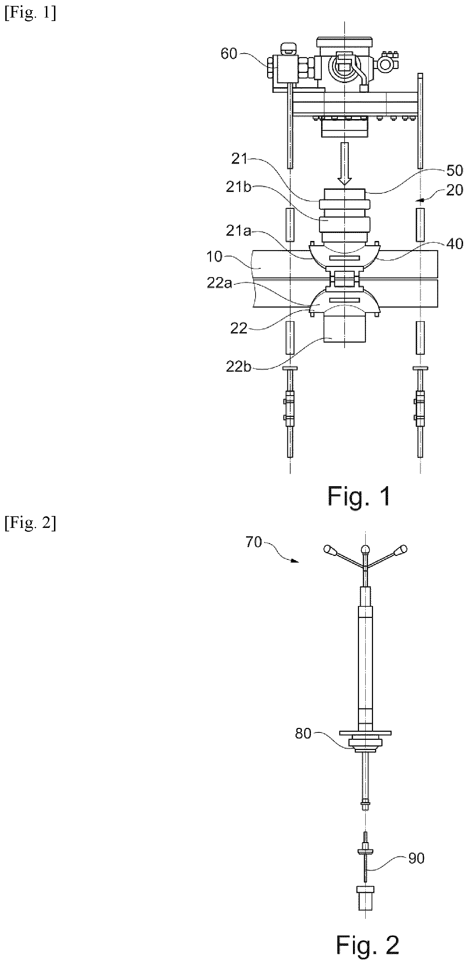

Le procédé d'obturation d'une conduite 10 (de forme cylindrique) peut comprendre une étape a0), exécutée avant l'étape a), de pose d'un adaptateur sur la conduite 10. Notamment, et tel qu'illustré à la figure 1, l'adaptateur 20 comprend deux sections dites, respectivement, section supérieure 21 et section inférieure 22. Chaque section 21 et 22 comprend une base 21a, 22a et une portion cylindrique 21b, 22b. A cet égard, la base 21a, 22a peut comprendre une plaque incurvée et configurée pour épouser, par une face interne et de manière conforme, la surface extérieure de la conduite 10. Par ailleurs, pour chacune des sections 21, 22, la portion cylindrique 21b, 22b surmonte la base 21a, 22a par une face externe de ladite base et opposée à la face interne.

La pose de l'adaptateur 20 comprend ainsi la pose de chacune des sections 21, 22 par la face interne de leur base respective contre la surface externe de la conduite. Plus particulièrement, les deux sections sont disposées de manière diamétralement opposée par rapport à la conduite. En d'autres termes, la portion cylindrique 21b de la section supérieure 21 et la portion cylindrique 22b de la section inférieure 22 partage le même axe de révolution.

La portion cylindrique 21a de la section supérieure 21 définit, par son extrémité libre 50, un accès à la conduite 10, tandis que l'extrémité libre de la portion cylindrique 22a est bouchée.

Une substance adhésive, notamment une colle, peut être intercalée entre la face interne de chacune des bases et la conduite afin de garantir une étanchéité entre la base considérée et la conduite.

L'adapteur 20 peut être conçu pour recevoir, après exécution du procédé selon la présente invention, une vanne et/ou une conduite de dérivation.

Le procédé d'obturation selon la présente invention peut également comprendre la mise en œuvre d'un sas 60 (étape a1)). Notamment, et tel qu'illustré à la figure 1, le sas 60 est fixé sur l'extrémité libre 50 de la portion cylindrique 21a de la section supérieure 21. Le sas 60 permet un accès étanche dans la portion cylindrique 21a de la section supérieure 21.

Le procédé selon la présente invention comprend également l'exécution d'une étape a) de perçage de la conduite 10. Le perçage peut alors être mis en œuvre au moyen d'un outil de perçage 70. Notamment, l'outil de perçage 70 (figure 2) comprend une section de couplage 80 par laquelle ledit outil 70 peut être couplé au sas 60, ladite section de couplage 80 étant prolongée par un foret 90. Notamment, ce couplage permet de procéder à un perçage, notamment de part en part de la conduite 10. Plus particulièrement, l'outil de perçage, une fois couplé au sas 70, permet de former une zone d'accès supérieure et une zone d'accès inférieure dans la conduite, et diamétralement opposées l'une de l'autre. La zone d'accès supérieure correspond à un perçage d'une zone de la conduite délimité par la portion cylindrique 21a de la section supérieure 21, tandis que la zone d'accès inférieure correspond à un perçage d'une zone de la conduite délimité par la portion cylindrique 22a de la section inférieure 22. Il est entendu que l'étape de perçage de la conduite 10 s'accompagne également d'un perçage de la base 21a et de la base 22a. Il est également entendu que les coupons résultants des perçages sont extraits de la conduite après perçage.

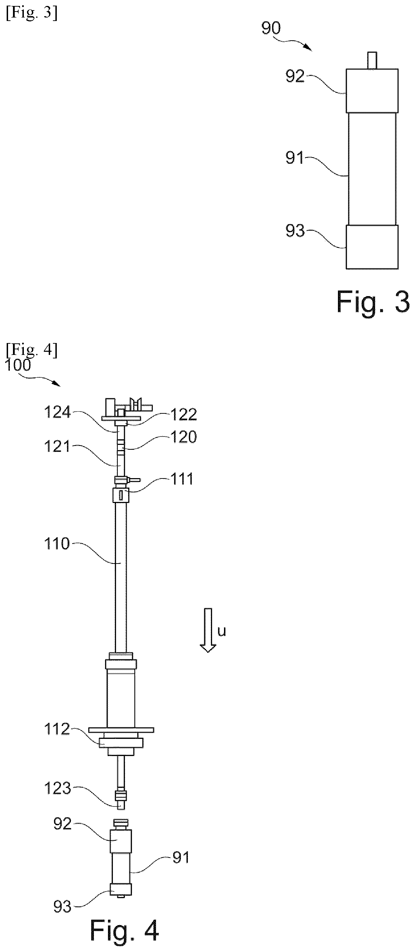

L'étape a) est suivie de l'exécution d'une étape b). Notamment l'étape b) comprend l'insertion d'un obturateur 90 par la zone d'accès supérieure. A cet égard, la figure 3 est une illustration schématique d'un obturateur susceptible d'être mis en œuvre dans le cadre de la présente invention. L'obturateur 90 peut comprendre une gaine gonflable 91 de forme cylindrique et bouchée à chacune de ses extrémités par un capuchon droit 92, 93. L'insertion de l'obturateur 90 dans la conduite 10 par la zone d'accès supérieure peut être exécutée au moyen d'un outil d'insertion 100 (figure 4).

L'outil d'insertion 100 comprend une section principale 110 à l'intérieur de laquelle est formé un alésage qui s'étend, selon un sens principal « u », d'une extrémité de butée 111 vers une extrémité de couplage 112. L'outil d'insertion 100 comprend également une perche d'insertion 120 pourvue d'un arbre 121 en liaison glissière ou pivot glissant avec l'alésage, et qui s'étend selon le sens principal d'une extrémité de manipulation 122 vers une extrémité d'insertion 123. L'arbre 110 comprend une butée d'arbre 124 disposée entre l'extrémité de manipulation 122 disposée et l'extrémité de buté 111. L'obturateur est disposé dans le prolongement de l'extrémité d'insertion 120 en aval de l'extrémité de couplage 112 selon le sens principal.

L'outil d'insertion 100 comprend également un jeu de cales 71a, 71b, 71c et 71d, chaque cale, présentant une hauteur H qui lui est spécifique, est configurée pour être intercalée entre la butée d'arbre et l'extrémité de butée de manière à définir une profondeur d'insertion de l'obturateur. L'étape b) comprend la détermination d'une profondeur d'insertion de l'obturateur et le choix d'une cale parmi le jeu de cales à disposer contre l'arbre entre la butée d'arbre et l'extrémité de butée.

La mise en œuvre d'une cale permet ainsi de limiter de manière contrôlée la course de l'obturateur. Notamment ce dernier est atteint la position voulue dans la conduite dès lors que la buté d'arbre bute contre la cale selon le sens principal.

Chaque cale parmi le jeu de cales peut comprendre un profilé 72 présentant une section en « U » ou en « C », et formant un logement. Ainsi, l'étape b) peut comprendre la disposition de l'arbre dans le logement, l'une des extrémités du profilé prenant appui contre l'extrémité de buté.

A cet égard, l'obturateur 90 peut être rendu solidaire de l'extrémité d'insertion par le bouchon droit 92. Ce dernier est notamment configuré pour être couplé à un conduit formé dans la perche d'insertion 120 permettant de gonfler la gaine gonflable lorsque l'obturateur est disposé dans le conduit.

Il est entendu que la distance entre le bouchon droit 92 et le bouchon droit 93 est fonction du diamètre interne de la conduite 10. Notamment, cette distance est supérieure au diamètre interne de la conduite. Ainsi, la mise en œuvre de la calle permet un positionnement précis de l'obturateur 90. Plus particulièrement, la calle permet de s'assurer que les bouchons droits 92 et 93 sont bien disposés respectivement dans la portion cylindrique 21a et la portion cylindrique 22a. Cette configuration permet un gonflage de la gaine gonflable 91 au contact direct de la zone d'accès supérieure et de la zone d'accès inférieure.

Le gonflage de l'obturateur 90 peut notamment être exécuté par injection d'air sous pression dans le conduit formé dans la perche d'insertion 120. Plus particulièrement, l'extrémité de manipulation peut comprendre une vanne de connexion permettant l'injection d'air sous pression dans le conduit considéré.

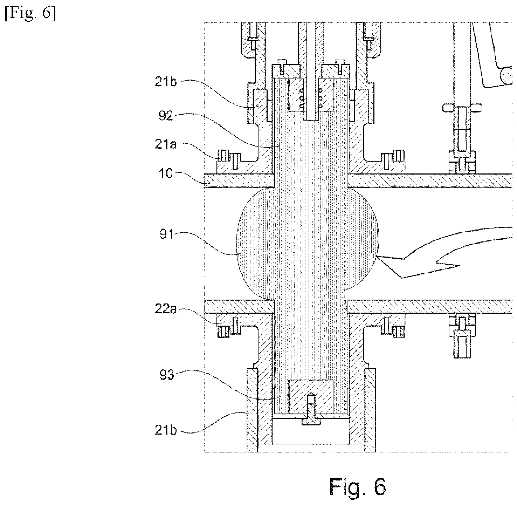

A cet égard, la figure 6 représente un obturateur gonflé dans une conduite 10.

Le procédé de perçage permet ainsi d'effectuer un perçage d'une conduite à partir d'une génératrice de ladite conduite et perpendiculairement à l'axe de révolution de la conduite. La considération d'un jeu de cales permet d'adapter le procédé à des conduites de diamètre différents, et/ou différentes profondeurs de perçage.

L'invention concerne également un kit de perçage de conduites, ledit kit comprenant :
- un outil d'obturation qui comprend une section principale à l'intérieur de laquelle est formé un alésage qui s'étend, selon un sens principal, d'une extrémité de butée vers une extrémité de couplage, une perche d'insertion pourvue d'un arbre en liaison pivot ou pivot glissant avec l'alésage, et qui s'étend selon le sens principal d'une extrémité de manipulation vers une extrémité d'insertion, l'arbre comprenant une butée d'arbre disposée entre l'extrémité de manipulation disposée et l'extrémité de buté, un obturateur étant disposé dans le prolongement de l'extrémité d'insertion en aval de l'extrémité de couplage selon le sens principal ;
- un jeu de cales présentant, chaque cale, présentant une hauteur H qui lui est spécifique, est configurée pour être intercalée entre la butée d'arbre et l'extrémité de butée de manière à définir un profondeur d'insertion de l'obturateur.

Bien sûr, l'invention n'est pas limitée aux modes de réalisation décrits et on peut y apporter des variantes de réalisation sans sortir du cadre de l'invention tel que défini par les revendications.

## Revendications

1. Procédé d'obturation d'une conduite (10), d'un diamètre externe prédéterminé, le procédé d'obturation comprenant l'exécution des étapes suivantes :
a) une étape de perçage, de deux zones de la conduite (10) dites, respectivement, zone d'accès supérieure et zone d'accès inférieure, et diamétralement opposées l'une de l'autre ;
b) une étape d'insertion d'un obturateur (90) gonflable dans la conduite (10) par la zone d'accès supérieure, l'insertion de l'obturateur (90) étant réalisée au moyen d'un outil d'insertion (100) qui comprend une section principale à l'intérieur de laquelle est formé un alésage qui s'étend, selon un sens principal, d'une extrémité de butée (111) vers une extrémité de couplage (112), une perche d'insertion (120) pourvue d'un arbre (121) en liaison glissière ou pivot glissant avec l'alésage, et qui s'étend selon le sens principal d'une extrémité de manipulation (122) vers une extrémité d'insertion (123), l'arbre (121) comprenant une butée d'arbre (124) disposée entre l'extrémité de manipulation (122) et l'extrémité de buté, l'obturateur (90) étant disposé dans le prolongement de l'extrémité d'insertion (123) en aval de l'extrémité de couplage (112) selon le sens principal, l'outil d'insertion (100) comprend également un jeu de cales (71a, 71b, 71c et 71d), chaque cale, présentant une hauteur H qui lui est spécifique, est configurée pour être intercalée entre la butée d'arbre (124) et l'extrémité de butée (111) de manière à définir une profondeur d'insertion de l'obturateur (90), l'étape b) comprenant la détermination d'une profondeur d'insertion de l'obturateur (90) et le choix d'une cale parmi le jeu de cales (71a, 71b, 71c et 71d) à disposer contre l'arbre (121) entre la butée d'arbre (124) et l'extrémité de butée (111).

2. Procédé d'obturation selon la revendication 1, dans lequel chaque cale parmi le jeu de cales (71a, 71b, 71c et 71d) comprend un profilé présentant une section en « U » ou en « C », et formant un logement, l'étape b) comprenant la disposition de l'arbre (121) dans le logement, l'une des extrémités du profilé prenant appui contre l'extrémité de buté.

3. Procédé d'obturation selon la revendication 1 ou 2, dans lequel l'étape c) comprend le coulissement de l'arbre (121) dans l'alésage.

4. Procédé d'obturation selon l'une des revendications 1 à 3, dans lequel ledit procédé comprend également une étape a0), exécutée avant l'étape a), de pose d'un adaptateur (20) sur la conduite (10), l'adapteur comprenant deux sections dites respectivement, section supérieure (21) et section inférieure (22), chaque section comprenant une base (21a, 22a) et une portion cylindrique (21b, 22b) surmontant ladite base (21a, 22a), la base (21a, 22a) comprenant une plaque incurvée épousant de manière conforme la conduite (10), la portion cylindrique (22b) de la section inférieure (22) étant bouchée hermétiquement par son extrémité libre, l'étape a0) comprenant la disposition de l'une et l'autre de la section supérieure (21) et de la section inférieure (22) sur la conduite (10) dans des positions diamétralement opposées.

5. Procédé d'obturation selon la revendication 4, dans lequel ledit procédé comprend également une étape a1) de couplage d'un sas (60) avec l'extrémité libre (50) de la portion cylindrique (21b) de la section supérieure (21).

6. Procédé d'obturation selon la revendication 5, dans lequel l'exécution de l'étape b) comprend le couplage de l'extrémité de couplage (112) avec le sas (60).

7. Procédé d'obturation selon l'une des revendications 1 à 6, dans lequel l'étape b) est suivi d'une étape de gonflage de l'obturateur (90) disposé dans la conduite (10).

8. Procédé d'obturation selon l'une des revendications 1 à 7, dans lequel l'obturateur (90) comprend une gaine gonflable (91) de forme cylindrique et bouchée à chacune de ses extrémités par un capuchon droit (92, 93).

9. Kit d'obturation de conduites (10), ledit kit comprenant :
- un outil d'obturation qui comprend une section principale à l'intérieur de laquelle est formé un alésage qui s'étend, selon un sens principal, d'une extrémité de butée (111) vers une extrémité de couplage (112), une perche d'insertion (120) pourvue d'un arbre (121) en liaison pivot glissant avec l'alésage, et qui s'étend selon le sens principal d'une extrémité de manipulation (122) vers une extrémité d'insertion (123), l'arbre (121) comprenant une butée d'arbre (124) disposée entre l'extrémité de manipulation (122) disposée et l'extrémité de buté, un obturateur (90) étant disposé dans le prolongement de l'extrémité d'insertion (123) en aval de l'extrémité de couplage (112) selon le sens principal ;
- un jeu de cales (71a, 71b, 71c et 71d) présentant, chaque cale, présentant une hauteur H qui lui est spécifique, est configurée pour être intercalée entre la butée d'arbre (124) et l'extrémité de butée (111) de manière à définir un profondeur d'insertion de l'obturateur (90).
